# FASCICULE DE BREVET EUROPEEN

(11) **EP 1 363 463 B1**
(45) Date de publication et mention de la délivrance du brevet: **26.12.2007**
(21) Numéro de dépôt: 03291065.5
(22) Date de dépôt: 02.05.2003
(51) Int. Cl.: H04N 13/00, H04N 17/00

(54) **Procédé et dispositif pour étalonner un banc de prise de vues stéréoscopiques**
Verfahren und Vorrichtung zur Kalibrierung einer stereoskopen Kamera
Method and apparatus for calibrating a stereoscopic camera

(30) Priorité: 03.05.2002 FR 0205553
(43) Date de publication de la demande: 19.11.2003
(73) Titulaire: CENTRE NATIONAL D'ETUDES SPATIALES, 75001 Paris (FR)
(72) Inventeur: Lamboley, Marcel, 31200 Toulouse (FR)
(74) Mandataire: Texier, Christian

(56) Documents cités:
- EP-A- 0 957 642
- SHIH S-W ET AL: "CALIBRATION OF AN ACTIVE BINOCULAR HEAD" IEEE TRANSACTIONS ON SYSTEMS, MAN AND CYBERNETICS. PART A: SYSTEMS AND HUMANS, IEEE SERVICE CENTER, US, vol. 28, no. 4, 1 juillet 1998 (1998-07-01), pages 426-442, XP000767261 ISSN: 1083-4427
- ALBERTO BORGHESE N ET AL: "Calibrating a video camera pair with a rigid bar" PATTERN RECOGNITION, PERGAMON PRESS INC. ELMSFORD, N.Y, US, vol. 33, no. 1, janvier 2000 (2000-01), pages 81-95, XP004243915 ISSN: 0031-3203
- ZHAO W ET AL: "Effects of camera alignment errors on stereoscopic depth estimates" PATTERN RECOGNITION, PERGAMON PRESS INC. ELMSFORD, N.Y, US, vol. 29, no. 12, 1 décembre 1996 (1996-12-01), pages 2115-2126, XP004015755 ISSN: 0031-3203

## Description

L'invention concerne un procédé et un dispositif pour étalonner de façon précise un système de prises de vue : cela s'applique particulièrement à un banc de prise de vues stéréoscopiques pour lequel les exigences de correction de distorsion sont très contraignantes. Un tel système comprend deux caméras ayant une même focale nominale, disposées sur un banc commun ayant un champ de vue commun pour fournir d'un même point observé dans le champ deux images respectives sur des matrices respectives nominalement alignées de capteurs CCD ayant des tailles nominales.

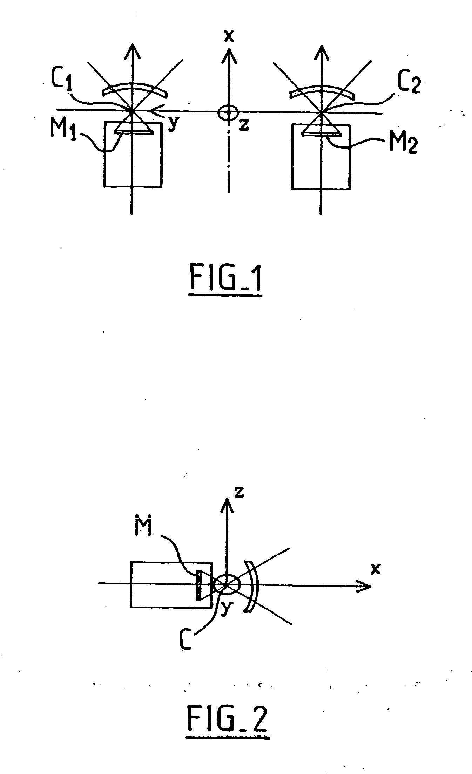

Les figures 1 et 2 du dessin sont des schémas en vue de dessus (fig.1), en vue de côté (fig.2) sur lesquels on a représenté les caméras par leurs matrices M1 et M2, leurs centres optiques C1 et C2, ainsi que les axes (XYZ) du banc. L'axe X est parallèle aux axes optiques, l'axe Y est confondu avec la droite joignant les deux centres optiques, l'axe Z orienté vers le haut est perpendiculaire à X et Y.

L'objectif de la méthode de stéréovision est d'établir une carte de disparités à partir du champ de vue commun aux deux images de droite et de gauche (on appelle disparité l'écart entre les positions du même objet vu dans la camera de gauche et celle de droite).

Dans la réalité, des corrections sont nécessaires pour tenir compte d'un défaut éventuel d'alignement ou de réalisation des matrices, d'une erreur sur la focale des optiques des caméras et des distorsions de ces optiques.

Cela est généralement obtenu au moyen de mires placées dans le champ de vue des caméras et qui, grâce à un traitement des images obtenues, permettent de calculer les paramètres intrinsèques et extrinsèques des caméras (cf. par exemple EP 1 100 048). Cette méthode présente deux inconvénients :
- La précision de l'identification des paramètres dépend de la mire, de sa position, des conditions expérimentales et des outils informatiques utilisés pour extraire les points caractéristiques conduisent souvent à une modélisation des paramètres trop approximative pour restreindre la corrélation à une recherche sur un segment de l'image (nombre restreint de pixels de l'image rectifiée pris sur une seule ligne de l'image). Cet inconvénient est d'autant plus gênant que le champ de vue est large, donc les distorsions optiques importantes.

L'invention a pour objet un procédé et un dispositif qui permettent d'effectuer ces corrections en laboratoire sans présenter les inconvénients exposés ci-dessus.

La publication SHIH S-W ET AL : « CALIBRATION OF AN ACTIVE BINOCULAR HEAD" IEEE TRANSACTIONS ON SYSTEMS, MAN AND CYBERNETICS. PART A: SYSTEMS AND HUMANS, IEEE SERVICE CENTER, US, vol. 28, n° 4, 1 juillet 1998 (1998-07-01), pages 426-442, XP000767261 ISSN: 1083-4427 décrit un procédé/dispositif pour étalonner de façon précise un banc de prise de vues stéréoscopiques qui comprend deux cameras ayant une même focale nominale, disposées sur un banc commun, ayant un champ de vue commun, pour fournir d'un même point observé dans le champ deux images respectives sur des matrices respectives nominalement alignées de capteurs CCD ayant une taille nominale, cet étalonnage ayant but d'effectuer une correction tenant compte, s'il y a lieu, d'un défaut d'alignement ou de réalisation des matrices, d'une erreur sur la focale des optiques des caméras et des distorsions de ces optiques.

Selon le procédé de l'invention :
- on place le banc sur un mécanisme permettant de le déplacer de façon contrôlée en site et en azimut, éventuellement de le déplacer en translation,
- on illumine chaque caméra au moyen d'une même source collimatée fixe pour former sur la matrice de la caméra une image de la source située à l'infini,
- on commande le mécanisme pour effectuer par positions successives un balayage régulier en site et en azimut couvrant tout le champ de vue des caméras et, pour chaque position, on traite les images prises pour déterminer les coordonnées réelles de l'image,
- on calcule par ailleurs les coordonnées théoriques de l'image de la source à partir des angles de balayage, de la focale nominale et des tailles nominales des capteurs,
- On détermine les écarts entre les coordonnées réelles et les coordonnées théoriques pour réaliser un tableau des corrections à apporter à chaque capteur. Ces tableaux sont utilisés à chaque prise de vue pour corriger les deux images avant de les traiter.

L'intérêt de l'invention réside notamment dans l'utilisation d'une source collimatée permettant de ne prendre en compte que les angles d'orientation du système à étalonner et dans la définition arbitraire de la direction de référence du système à étalonner.

L'invention a également pour objet un dispositif pour la mise en oeuvre de ce procédé.
Ce dispositif comprend, selon l'invention :
- Un mécanisme sur lequel est monté le banc et qui permet de déplacer le banc en site et en azimut, éventuellement en translation ;
- Un collimateur disposé dans le champ de vue des caméras pour éclairer chaque caméra simultanément ou successivement, de façon à former sur la matrice de la caméra une image de la source du collimateur ;
- Des moyens pour actionner le mécanisme afin de faire varier la position du banc en site et/ou en azimut ;
- Des moyens pour calculer les coordonnées théoriques de ces images à partir des angles de site et d'azimut, de la focale nominale des caméras et des tailles nominales des capteurs ;
- Des moyens pour calculer les coordonnées réelles des images formées sur les matrices pour différentes positions en site et en azimut du banc, couvrant tout le champ de vue des caméras,
- Des moyens pour calculer les écarts entre les coordonnées réelles et les coordonnées théoriques pour chaque capteur.
- Des moyens pour corriger les images en prenant en compte les écarts ainsi calculés.

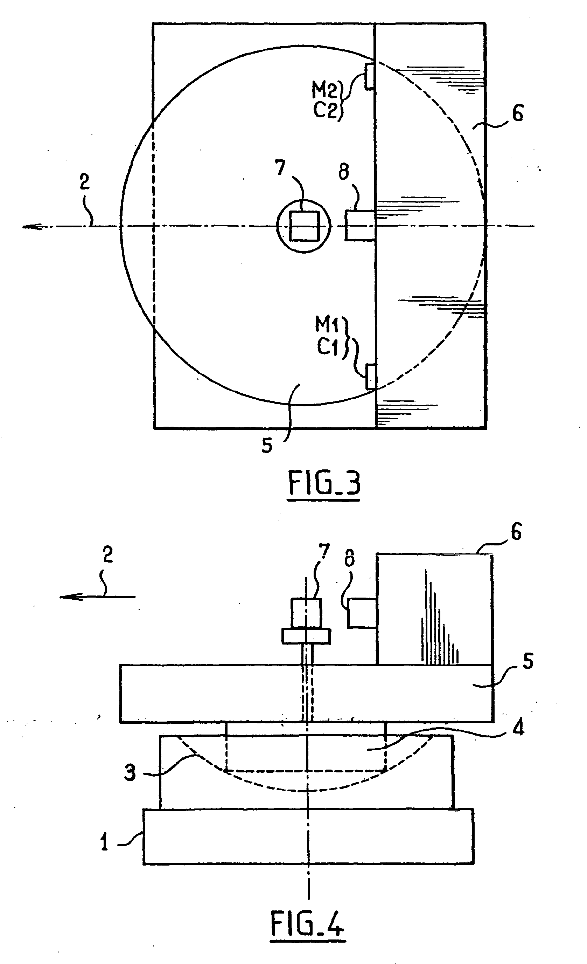

On décrira ci-après un exemple de réalisation de ce dispositif en référence aux figures 3 et 4 du dessin joint qui sont des schémas du dispositif, respectivement en vue de dessus (fig.3) et vue de côté (fig.4).

Pour faire une correction globale prenant en compte aussi bien un défaut de positionnement des matrices, une erreur sur la focale que les distorsions elles-mêmes, on définit a priori sur la mécanique du système de prise de vues un trièdre de référence dont l'origine est le milieu de la base stéréo et dont les directions sont définies par les normales à deux faces adjacentes d'un cube optique (7).

L'ensemble mécanique est constitué de trois éléments assemblés entre eux : on trouve à la base un mécanisme de translation horizontale (1), qui est utilisé pour amener en face d'un collimateur, schématisé sur les figures par sa direction (2)), soit l'optique de droite, soit celle de gauche, sans avoir à reprendre les réglages optiques. Sur cet élément est vissé un berceau goniométrique (3) d'axe horizontal dont la platine peut être inclinée de +/- 45°. Enfin, sur cette platine est fixé un mécanisme de rotation (4) d'axe vertical. L'ordre de montage des mécanismes peut évidemment être changé en fonction des contraintes mécaniques du montage.

Sur cet ensemble est vissé le support (5) du banc stéréo (6).

Sur le support sont fixés deux mécanismes de rotation trois axes permettant le faible débattement (quelques degrés) nécessaire à la compensation des biais mécaniques. L'un d'eux supporte un cube optique (7) utilisé pour repérer les axes de rotation, l'autre supporte le banc stéréo qui porte lui-même un cube optique (8).

Le cube optique et le cube collé sur le banc sont suffisamment proches l'un de l'autre pour qu'on puisse les avoir simultanément dans le champ de vue d'une lunette autocollimatrice d'axe de visée horizontal utilisée pour les alignements, cette lunette a par exemple une focale de 160mm et une pupille de sortie de diamètre 30mm.

Le collimateur utilisé comme source lumineuse a une pupille de sortie suffisamment grande pour que l'optique en cours de test soit illuminée quelle que soit l'orientation du banc stéréo. La source est suffisamment étendue pour donner dans le plan focal des optiques une image de diamètre supérieur à deux points image, pour que l'erreur d'interpolation obtenue par calcul du barycentre photométrique soit inférieure à 0,1 pixel.

Le montage mécanique est étudié pour permettre de réaliser une rotation en site et en azimut de façon précise : l'erreur de direction doit être d'au moins un ordre de grandeur inférieure à la résolution spatiale du système de prise de vue, soit 0,25 milliradian avec une matrice de 300x400 pixels carrés de 14 microns pour une focale de 5,5 mm.

On choisit des mécanismes précis au 1/100 de degré. Le mécanisme étant monté, on s'assure que ses axes de rotation sont bien orthogonaux et l'on amène les faces du cube, monté sur une rotule trois axes, à être parallèles aux axes de rotation du mécanisme.

Ensuite, on aligne le faisceau du collimateur avec la direction orthogonale aux deux axes de rotation matérialisée par une face du cube.

Le mécanisme permet de rendre parallèles les faces du cube (7) monté sur le mécanisme avec les faces du cube (8) monté sur le banc.

En illuminant successivement (ou simultanément si la pupille de sortie du collimateur est assez large) chacune des optiques, on commande les mécanismes de façon à effectuer un balayage en site et azimut régulier couvrant tout le champ de vue ; à chaque position, les images prises sont traitées pour calculer le barycentre photométrique de l'image de la source. Les coordonnées obtenues sont enregistrées dans un fichier qui donne les coordonnées réelles. On calcule par ailleurs les coordonnées nominales à partir des angles de balayage, de la focale nominale et des tailles nominales de pixel. L'écart entre ces valeurs donne le tableau des corrections à apporter. Ce tableau doit être interpolé pour fournir les corrections à apporter à chaque pixel.

Dans la mesure où la position dans le plan focal d'un point lumineux situé dans une direction donnée ne dépend pas de la distance, cette méthode permet de corriger l'ensemble des imperfections optiques.

L'image acquise est traitée en temps réel de façon à extraire le barycentre photométrique de l'image de la source. Pour en améliorer la précision, on mesure la tension d'obscurité sur le pourtour d'une fenêtre de mesure centrée sur le point le plus lumineux de l'image. Cette tension varie en effet avec la position de l'image dans la matrice. Cette valeur majorée d'un certain coefficient est soustraite de l'intensité lumineuse mesurée dans la fenêtre et on calcule le barycentre photométrique à partir des valeurs supérieures à ce seuil. Pour chaque point de mesure, le temps de pose est ajusté pour que le point le plus lumineux ait un éclairement voisin de 90% de la dynamique de mesure. Le calcul barycentrique fournit les coordonnées du point et l'intensité de l'éclairement : cette intensité, divisée par le temps de pose, fournit l'éclairement pondéré qui est une mesure du vignettage de l'optique utilisée puisque l'intensité de la source est invariante.

Cette mesure est utilisée pour effectuer une correction photométrique des images pour compenser le vignettage.

Chaque point de mesure est prélevé plusieurs fois et on retient la valeur moyenne obtenue.

Les prises d'image et leur traitement sont effectués sur un ensemble de points constituant une grille régulière couvrant la quasi totalité de l'image : pour cela, on commence par déterminer les bornes du balayage en site et en azimut en commandant les mécanismes de rotation manuellement, ensuite, ce domaine de mesure est échantillonné suivant une grille qui serait régulière en l'absence de distorsion ; le nombre de lignes et de colonnes est programmable par l'opérateur.

Après exécution du balayage, le fichier de mesure fournit pour chaque point les coordonnées du barycentre photométrique et l'éclairement pondéré ainsi qu'un certain nombre de status renseignant sur la validité de la mesure. Les coordonnées du point central sont également relevées. En divisant l'éclairement pondéré par l'éclairement pondéré du point central (ou d'un point voisin du centre), on détermine également la table de correction du vignettage.

Un logiciel de traitement reprend le fichier de mesure obtenu à l'étape précédente. Pour chaque point mesuré, le logiciel calcule l'écart entre le point réel et le point nominal qui serait obtenu en l'absence de défaut optique.

En prenant en compte les angles de site et d'azimut et les caractéristiques nominales de l'optique et de la matrice (focale et taille de pixel), on définit un ensemble de points qui constitueront l'image corrigée ; chacun de ces points est défini par un couple (θ,φ). On recherche les quatre points de la grille idéale qui encadrent le point courant et on calcule la correction à affecter à ce point par une interpolation bilinéaire sur les corrections relatives aux quatre points encadrant, ce qui donne les coordonnées du point correspondant dans l'image réelle : ces coordonnées en général ne sont pas entières. On fera donc une nouvelle interpolation bilinéaire pour obtenir les niveaux de gris d'un réseau de points équidistants alignés en ligne et en colonne correspondant dans chaque image à des angles de site et azimut identiques et prédéterminés. On fera également si nécessaire la correction de vignettage. Afin d'éviter de perdre en champ de vue, pour les points qui, après correction, se retrouvent à l'extérieur de la grille, on définira une correction géométrique par extrapolation à partir des points voisins.

Ce traitement doit être réalisé pour toutes les images que l'on veut corréler. Il serait possible de gagner en temps de calcul en tabulant les valeurs des corrections géométriques de chaque point. Ce serait au détriment du volume mémoire puisqu'il faudrait alors stocker pour des images de 300 x 400 points, 480 000 paramètres et l'étape d'interpolation des niveaux de gris ne peut pas être tabulée puisqu'elle dépend du contenu de l'image.

L'invention n'est pas limitée aux exemples qui ont été décrits.

## Revendications

1. Procédé pour étalonner de façon précise un système de prise de vues stéréoscopiques qui comprend deux caméras (M1, M2) ayant une même focale nominale, disposées sur un banc commun (6), ayant un champ de vue commun pour fournir d'un même point observé dans le champ deux images respectives sur des matrices respectives (M1, M2) nominalement alignées de capteurs CCD ayant une taille nominale, cet étalonnage ayant pour but d'effectuer une correction tenant compte, s'il y a lieu, d'un défaut d'alignement ou de réalisation des matrices, d'une erreur sur la focale des optiques des caméras et des distorsions de ces optiques, **caractérisé en ce que**:
- on place le banc sur un mécanisme (1-5) permettant de le déplacer de façon contrôlée en site et en azimut,
- on illumine chaque caméra au moyen d'une même source collimatée (2) fixe pour former sur la matrice de la caméra une image de la source située à l'infini,
- on commande le mécanisme pour effectuer par positions successives un balayage régulier en site et en azimut couvrant tout le champ de vue des caméras et, pour chaque position, on traite les images prises pour déterminer les coordonnées réelles de l'image,
- on calcule par ailleurs les coordonnées théoriques de l'image de la source à partir des angles de balayage, de la focale nominale et des tailles nominales des capteurs,
- on détermine les écarts entre les coordonnées réelles et les coordonnées théoriques pour réaliser un tableau des corrections à apporter à chaque capteur, et
- on utilise ces tableaux, à chaque prise de vue, pour corriger les deux images avant de les traiter.

2. Dispositif pour étalonner un banc de prise de vues stéréoscopique comprenant deux caméras (M1, M2) ayant une même focale nominale disposées sur un banc commun (6), et ayant un champ de vue commun pour fournir d'un même point observé dans le champ deux images respectives sur des matrices respectives (M1, M2) de capteurs CCD ayant une taille nominale, cet étalonnage ayant pour but d'effectuer une correction tenant compte, s'il y a lieu, d'un défaut de positionnement ou de réalisation des matrices, d'une erreur sur la focale et des distorsions optiques, ce dispositif étant **caractérisé en ce qu'**il comprend:
- un mécanisme (1-5) sur lequel est monté le banc (6) et qui permet de déplacer le banc en site et en azimut;
- des moyens pour actionner le mécanisme afin de faire varier la position du banc en site et/ou en azimut;
- un collimateur (2) fixe disposé dans le champ de vue des caméras pour éclairer chaque caméra simultanément ou successivement, de façon à former sur la matrice de la caméra une image de la source du collimateur ;
- des moyens pour calculer les coordonnées réelles des images formées sur les matrices pour différentes positions en site et en azimut du banc couvrant tout le champ de vue des caméras;
- des moyens pour calculer les coordonnées théoriques de ces images à partir des angles de site et d'azimut, de la focale nominale des caméras et de la taille nominale des capteurs.
- des moyens pour calculer les écarts entre les coordonnées réelles et les coordonnées théoriques pour chaque capteur.
- Des moyens pour corriger les images en prenant en compte les écarts ainsi calculés.

3. Dispositif selon la revendication 2 et qui comprend des moyens pour définir sur le mécanisme un trièdre de référence dont l'origine est le milieu de la base stéréo et dont les directions sont définies par les normales à deux faces adjacentes d'un cube optique (7).

4. Dispositif selon la revendication 3 et qui comprend un mécanisme de translation horizontale (1),pour amener en face du collimateur (2), soit la caméra de droite, soit la caméra de gauche, un berceau goniométrique (3) d'axe horizontal dont la platine peut être inclinée de +/- 45° fixé sur ce mécanisme, et un mécanisme de rotation (4) d'axe vertical fixé sur ce berceau.

5. Dispositif selon la revendication 4 et qui comprend un support (5) sur lequel sont fixés deux mécanismes de rotation trois axes dont l'un supporte un cube optique (7) utilisé pour repérer les axes de rotation et dont l'autre supporte le banc stéréo (6) qui porte lui-même un cube optique (8).

6. Dispositif selon l'une des revendications 2 à 5 et qui comprend des moyens pour interpoler les niveaux de gris de l'image ainsi obtenue pour retrouver un réseau de points équidistants alignés en ligne et en colonne correspondant dans chaque image à des angles de site et azimut identiques et prédéterminés.

## Claims

1. Method for accurately calibrating an active binocular system which comprises two cameras (M1, M2) having the same nominal focal length, positioned on a common head (6), having a common field of view to provide, from one and the same observed point in the field, two respective images on respective, nominally aligned matrices (M1, M2) of CCD sensors having a nominal size, the purpose of this calibration being to make a correction taking into account, if necessary, a defect of alignment or of implementation of the matrices, an error on the focal length of the optics of the cameras and distortions of these optics, **characterized in that**:
- the head is placed on a mechanism (1-5) enabling it to be moved in a controlled manner in elevation and in bearing,
- each camera is illuminated by means of one and the same fixed collimated source (2) to form on the matrix of the camera an image of the source located at infinity,
- the mechanism is controlled to perform, by successive positions, a regular sweep in elevation and in bearing covering the entire field of view of the cameras and, for each position, the images taken are processed to determine the actual coordinates of the image,
- the theoretical coordinates of the image of the source are moreover calculated based on the sweep angles, the nominal focal length and the nominal sizes of the sensors,
- the deviations between the actual coordinates and the theoretical coordinates are determined to create a table of the corrections to be applied to each sensor, and
- these tables are used, each time a photograph is taken, to correct the two images before processing them.

2. Device for calibrating an active binocular head comprising two cameras (M1, M2) having one and the same nominal focal length positioned on a common head (6), and having a common field of view to provide, from one and the same observed point in the field, two respective images on respective matrices (M1, M2) of CCD sensors having a nominal size, the purpose of this calibration being to make a correction taking into account, if necessary, a defect of positioning or of implementation of the matrices, an error on the focal length and optical distortions, this device being **characterized in that** it comprises:
- a mechanism (1-5) on which is mounted the head (6) and which makes it possible to move the head in elevation and in bearing;
. means for actuating the mechanism in order to vary the position of the head in elevation and/or in bearing;
- a fixed collimator (2) positioned in the field of view of the cameras to light each camera simultaneously or successively, so as to form on the matrix of the camera an image of the source of the collimator;
- means for calculating the actual coordinates of the images formed on the matrices for different elevation and bearing positions of the head, covering the entire field of view of the cameras;
- means for calculating the theoretical coordinates of these images from the elevation and bearing angles, from the nominal focal length of the cameras and from the nominal size of the sensors;
- means for calculating the deviations between the actual coordinates and the theoretical coordinates for each sensor;
- means for correcting the images by taking into account the duly calculated deviations.

3. Device according to Claim 2 and which comprises means for defining on the mechanism a reference trihedron, the origin of which is the centre point of the binocular base and the directions of which are defined by the normals to two adjacent sides of an optical cube (7).

4. Device according to Claim 3 and which comprises a horizontal movement mechanism (1), to bring into line with the collimator (2) either the right-hand camera or the left-hand camera, a goniometric cradle (3) of horizontal axis, the bed of which can be inclined by ± 45°, fixed to this mechanism, and a vertical axis rotation mechanism (4) fixed on this cradle.

5. Device according to Claim 4 and which comprises a support (5) on which are fixed two three-axis rotation mechanisms, one of which supports an optical cube (7) used to identify the rotation axes and the other of which supports the binocular head (6) which itself supports an optical cube (8).

6. Device according to one of Claims 2 to 5 and which comprises means for interpolating the grey levels of the duly obtained image to obtain an array of equidistant, row- and column-aligned points corresponding in each image to identical and predetermined elevation and bearing angles.

## Patentansprüche

1. Verfahren zum genauen Kalibrieren eines Systems für stereoskopische Aufnahmen, das zwei Kameras (M1, M2) umfaßt, die dieselbe nominelle Brennweite haben und die auf einem gemeinsamen Gestell (6) angebracht sind, mit einem gemeinsamen Sehfeld, um von einem bestimmten betrachteten Punkt im Sehfeld zwei jeweilige Bilder auf jeweils zugehörigen nominell ausgerichteten Matrizen (M1, M2) von CCD-Sensoren mit einer nominellen Größe zu liefern, wobei diese Kalibrierung zum Ziel hat, eine Korrektur auszuführen, die falls notwendig einen Fehler in der Ausrichtung oder der Herstellung der Matrizen, einen Fehler in der Brennweite der Optiken der Kameras und der Verzerrungen dieser Optiken berücksichtigt, **dadurch gekennzeichnet, daß**:
- das Gestell auf einer Einrichtung (1-5) plaziert wird, die es gestattet, es kontrolliert bezüglich des Elevationswinkels und des Azimutwinkels zu bewegen;
- jede Kamera mittels ein und derselben feststehenden kollimierten Quelle (2) beleuchtet wird, um auf der Matrix der Kamera ein Bild der im Unendlichen angeordneten Quelle zu bilden;
- die Einrichtung gesteuert wird, um durch aufeinanderfolgende Positionen eine gleichmäßige Abtastung der Elevation und des Azimuts durchzuführen, die das gesamte Sehfeld der Kameras abdeckt, und für jede Position die aufgenommenen Bilder ausgewertet werden, um die tatsächlichen Koordinaten des Bildes zu bestimmen;
- außerdem die theoretischen Koordinaten des Bildes der Quelle ausgehend von den Abtastwinkeln, der nominellen Brennweite und den nominellen Größen der Sensoren berechnet werden;
- der Abstand zwischen den tatsächlichen Koordinaten und den theoretischen Koordinaten bestimmt wird, um eine auf jeden Sensor anzuwendende Tabelle mit Korrekturen zu erstellen; und
- diese Tabellen bei jeder Aufnahme verwendet werden, um die beiden Bilder zu korrigieren, bevor sie verarbeitet werden.

2. Vorrichtung zum Kalibrieren eines Gestells für stereoskopische Aufnahmen, die zwei Kameras (M1, M2) mit derselben nominellen Brennweite umfaßt, die auf einem gemeinsamen Gestell (6) angebracht sind und die ein gemeinsames Sehfeld haben, um von einem bestimmten betrachteten Punkt im Sehfeld zwei jeweilige Bilder auf jeweils zugehörigen Matrizen (M1, M2) von CCD-Sensoren mit einer nominellen Größe zu liefern, wobei diese Kalibrierung zum Ziel hat, eine Korrektur auszuführen, die falls notwendig einen Fehler in der Positionierung oder der Herstellung der Matrizen, einen Fehler in der Brennweite und der optischen Verzerrungen berücksichtigt, wobei diese Vorrichtung **dadurch gekennzeichnet ist, daß** sie folgendes umfaßt:
- eine Einrichtung (1-5) auf der das Gestell (6) montiert ist und die es gestattet, das Gestell bezüglich des Elevationswinkels und des Azimutwinkels zu bewegen;
- Mittel, um die Einrichtung zu bewegen, um die Position des Gestells bezüglich des Elevationswinkels und/oder des Azimutwinkels zu verändern;
- einen feststehenden Kollimator (2), der im Sehfeld der Kameras angeordnet ist, um jede Kamera gleichzeitig oder aufeinanderfolgend zu beleuchten, derart, daß auf der Matrix der Kamera ein Bild der Quelle des Kollimators gebildet wird;
- Mittel zur Berechnung der tatsächlichen Koordinaten der auf den Matrizen geformten Bilder für verschiedene Positionen der Elevation und des Azimuts des Gestells, die das gesamte Sehfeld der Kameras durchlaufen;
- Mittel zur Berechnung der theoretischen Koordinaten dieser Bilder ausgehend von den Elevations- und Azimutwinkeln, der nominellen Brennweite der Kameras und der nominellen Größe der Sensoren;
- Mittel zur Berechnung des Abstands zwischen den tatsächlichen Koordinaten und den theoretischen Koordinaten für jeden Sensor;
- Mittel zur Korrektur der Bilder unter Berücksichtigung der so berechneten Abstände.

3. Vorrichtung nach Anspruch 2, die Mittel umfaßt, um auf der Einrichtung ein Bezugsdreibein zu definieren, dessen Ursprung die Mitte der Stereobasis ist und dessen Richtungen durch die Normalen auf zwei benachbarten Seiten eines optischen Kubus (7) definiert sind.

4. Vorrichtung nach Anspruch 3, die folgendes umfaßt: eine Einrichtung zur horizontalen Verschiebung (1), um entweder die rechte Kamera oder die linke Kamera gegenüber dem Kollimator (2) zu positionieren, ein goniometrisches Trägergestell (3) mit horizontaler Achse, dessen Tisch um +/- 45° geneigt werden kann und das auf dieser Einrichtung befestigt ist, und eine Rotationseinrichtung (4) mit vertikaler Achse, die auf diesem Trägergestell befestigt ist.

5. Vorrichtung nach Anspruch 4, die einen Träger (5) umfaßt, auf dem zwei Dreiachsen-Rotationseinrichtungen befestigt sind, von denen die eine einen optischen Kubus (7) trägt, der dafür verwendet wird, die Rotationsachsen zu bestimmen, und von denen die andere das Stereogestell (6) trägt, das seinerseits einen optischen Kubus (8) trägt.

6. Vorrichtung nach einem der Ansprüche 2 bis 5, die Mittel umfaßt, um die Grauwerte des so erhaltenen Bildes zu interpolieren, um ein Netz äquidistanter Punkte wiederzufinden, die in Zeilen und Spalten ausgerichtet sind, die in jedem Bild identischen und vorgegebenen Elevations- und Azimutwinkeln entsprechen.
